(19) Europäisches Patentamt
European Patent Office
Office européen des brevets

(11) **EP 2 199 755 A1**

(12) **EUROPEAN PATENT APPLICATION**

(43) Date of publication:
**23.06.2010 Bulletin 2010/25**

(51) Int Cl.:
*G01F 1/66* (2006.01)        *G01F 1/74* (2006.01)

(21) Application number: **08171871.0**

(22) Date of filing: **16.12.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nederlandse Organisatie voor toegepast -natuurwetenschappelijk onderzoek TNO 2628 VK Delft (NL)**

(72) Inventors:
• **Wróbel, Krzysztof Michal**
  **2542 PW Den Haag (NL)**
• **Bovenkamp, Ernst Gerard Pieter**
  **2622 AW Delft (NL)**

(74) Representative: **Hatzmann, Martin et al Vereenigde Johan de Wittlaan 7 2517 JR Den Haag (NL)**

(54) **An apparatus, a method and a computer program for recognition of flow regimes in a multiphase fluid flowing in a conduit**

(57)    The invention relates to a method 10 for identification of a flow regime using soft-sensing. At step 2 suitable data acquisition is carried out using soft-sensing. At step 4, data acquired by the sensor may be pre-processed in any suitable way. The signal is made available at the identification stage 6b of a trained statistical/stochastic method 6 (SSM) of data processing for identification of a flow regime. Additionally, the SSM 6, may be arranged to determine a probability of a transition of the assigned flow regime into a different flow regime.

Fig. 1

EP 2 199 755 A1

**Description**

FIELD

The invention relates to an apparatus, a method and a computer program for recognition of flow regimes in a multiphase fluid flowing in a conduit. In particular, the invention relates to enabling an accurate classification of a flow regime of a two-phase fluid. More in particular, the invention relates to enabling quantitative estimation of a stability of the detected flow regime. The invention further relates to a method and a computer program for enabling recognition of flow regimes in a multiphase fluid flowing in a conduit.

BACKGROUND OF THE INVENTION

An embodiment of an apparatus as is set forth in the opening paragraph is known from US 5 353 627. In the known apparatus use is made of a sensor arranged on a wall of a conduit wherein a multi-phase fluid is flowing for picking up a signal related to the fluid flow. In particular, the sensor is arranged to enable a non-intrusive sensing wherein a signal related to an acoustic wave propagating in a wall of the conduit is detected for characterizing the flow regime.

In order to classify the flow regime the known apparatus uses a database of expected flow regimes for enabling comparison between suitable features of a flow under consideration with reference flow regimes.

It is a disadvantage of the known apparatus that for classification of a flow regime a substantial match between its features and corresponding features of a reference flow regime is required. It is a further disadvantage of the known apparatus that transient flows can hardly be classified. It is a still further disadvantage of the known apparatus that possible dynamical changes in the flow regime cannot be anticipated with a high degree of accuracy.

SUMMARY OF THE INVENTION

It is an object of the invention to provide an apparatus for automatic recognition of flow regimes in a multiphase fluid flowing in a conduit. It is a further object of the invention to provide an apparatus capable of classifying transient flows. It is a still further object of the invention to provide an apparatus for enabling quantitative assessment of a possibility of transition from a given flow regime to a different flow regime.

To this end the apparatus according to the invention comprises:

- a sensor arranged for non-intrusively determining a set of features associated with a flow regime of the multiphase fluid;
- a memory unit comprising a trained stochastic model and one or more reference sets of features corresponding to reference flow regimes;
- a processor arranged for analyzing the set of features with respect to the reference sets of features by the stochastic model for assigning the flow regime to one of the reference flow regimes.

The invention is based on the insight that different flow regimes are characterized by specific individual characteristics pertinent to each distinctive flow regime. Accordingly, by suitably determining such individual characteristics and by smartly matching and/or comparing them with individual characteristics of possible expected flow regimes, an automatic classification of flow regimes of a multiphase fluid flowing in a conduit may be enabled.

In particular, in accordance with the invention, processing of data related to a suitable signal for purposes of recognition of a flow regime may be substantially improved when stochastic model is utilized for analyzing the signal or it features and for comparing the signal or its feature to reference data. It will be appreciated that any statistical or stochastic model known in the art may be used for practicing the invention. For example, Hidden Markov Model, Quadratic Bayes Normal Classifier, Nearest Mean Classifier, Linear Bayes Normal Classifier, Mixture of Gaussian classifier, Parzen classifier, Fisher's Least Square Linear Classifier or K-nearest neighbour Classifier may be used. A signal, characteristic to the flow regime, may be picked-up using so-called soft-sensing methods, based on non-intrusive measurements.

In accordance with the invention, a signal or its specific features is analyzed and is compared to reference data using trained stochastic model, which is arranged to provide pattern identification and/or pattern matching between the signal or features thereof characteristic of a flow pattern under consideration with respect to a signal or a feature of reference data.

It will be appreciated that for some applications it may be sufficient to monitor whether a specific flow regime occurs. In this case the reference data may be limited to data characteristic to this specific flow regime. Alternatively or additionally, the apparatus according to the invention may be arranged to recognize a plurality of possible regimes, whereby the reference data comprises suitable exemplary signals or features representative of such plurality of flow regimes. Preferably, the features relate to flow regime fingerprints, characteristic to constituents of the multiphase fluid. For example, the features may relate to local peak-to-peak values, local maxima, local root-mean-square (RMS), values related to a locally integrated spectrogram over time and frequency, and so on.

It will be appreciated that it may be advantageous to limit the volume of data conceived to be analyzed. For this purpose in accordance with an embodiment of the apparatus according to the invention, the picked-up signal may be pre-processed for yielding a suitable set of features characteristic of the flow regime under consideration.

For example, the signal may relate to acoustical phenomena occurring in a wall of the conduit wherein the fluid is flowing. Such signal may be generated by a clamp-on sensor which provides a suitable output in a time domain. In accordance with an embodiment of the invention, the signal may be split into a number of time windows, which may be overlapping. It will be appreciated that a degree of overlap between subsequent time windows for splitting the signal may be arbitrary chosen. Next, the signal may be analyzed for extracting specific features thereof which may be used for further processing in order to determine a current flow regime of the fluid flowing in the conduit.

It may be preferable that the apparatus according to the invention is operable using a suitable sequence of features as this may improve reliability of automatic pattern recognition. Correspondingly, the reference features may comprise a suitably arranged sequence as well.

When a sequence of specific features characteristic to a flow regime under consideration is being fed into a trained stochastic model, the latter will match the sequence to the most probable candidate for a prototype flow regime. Preferably, in order to improve pattern recognition and matching the reference data comprise sufficient number of prototype flow regimes, including transient flow regimes.

In an embodiment of the apparatus according to the invention, Hidden Markov Model is used for the stochastic model.

This technical measure is based on the understanding that Hidden Markov Model (HMM) algorithms are particularly suited for pattern recognition. In particular, it has been demonstrated that HMM algorithms perform particularly well in speech recognition applications. An embodiment of a HMM algorithm is known from Rabiner L.R., 1989, "A tutorial on hidden Markov models and selected applications in speech recognition", Proc. IEEE 77, 257-286.

In accordance with the invention, it has been found that HMM is also quite suitable for carrying out automatic recognition of flow patterns, particularly in a two-phase fluid. More in particular, it has been found that HMM can provide robust and accurate solution with high level of so-called generalization power. HMM algorithms are robust and accurate, which refers to ability of handling signals generated by flows typical for flow regimes as well as flows belonging to transition between the flow regimes. HMM is advantageous with respect to the so-called neural networks, as it provides generalization of the borders between phases with suitable degree of approximation. The neural networks, on the contrary, do not provide an a-priori known level of approximation and are highly dependent on previous training of the model.

In accordance with an aspect of the invention, the sensor is arranged to perform a non-intrusive measurement of a signal representative of a flow regime of the multiphase fluid flowing in a conduit. For example, the sensor may be arranged to be positioned in a mechanical contact with a wall of the conduit. In this case the signal conceived to be picked-up by the sensor may relate to an acoustic wave propagating in the wall in reaction to the multiphase fluid flowing in the conduit.

It will be appreciated that any arrangement enabling the sensor to pick-up the acoustic wave propagating in a wall of the conduit is contemplated. For example, the sensor may be releasably attached to a portion of the wall. In this case, the wall may comprise a compartment for housing the sensor. Alternatively, the sensor may be glued to a portion of the wall or be clamped on it. Preferably a portable sensor is used. This has an advantage of an easy installation of the apparatus for performing data pick-up and analysis.

In accordance with a further aspect of the invention the processor is further arranged to determine a probability of a transition of the assigned flow regime into a different flow regime.

It is found to be particularly advantageous not only to automatically recognize a flow regime, but also to provide a quantitative assessment of a possibility that the current flow regime would undergo a transition towards a different flow regime. Such functionality of the apparatus according to the invention is enabled by using a sufficient number of training sets, including transient modes, and by allowing the trained stochastic model to assign probabilities for features to modify from one fingerprint characterizing a first flow regime towards a different fingerprint characterizing a second flow regime, upon analysis and pattern recognition of a data set. This functionality is of a specific value once the features under consideration do not fully match one of the reference datasets.

In a particular embodiment of the apparatus according to the invention, it is suitable for analysis of a two-phase fluid comprising gas and liquid, for estimating gas volume fraction or liquid volume fraction. Preferably, in the apparatus according to the invention the processor is operable using a subroutine for enabling such determination.

For example, the a gas volume fraction may be determined in accordance with the formula:

$$GVF = \frac{U_{sg}}{U_{sl} + U_{sg}} * 100 \, ,$$

where

GVF is gas volume fraction;
$U_{sg}$ is superficial velocity of gas;
$U_{sl}$ is superficial velocity of liquid.

A corresponding formula for a liquid volume fraction (LVF) may be given by:

$$LVF = \frac{U_{sl}}{U_{sl} + U_{sg}} * 100 .$$

Based on the determined volume fraction data respective flow rates of the phases (liquid and gas) may be determined.

A method for recognition of flow regimes in a multiphase fluid flowing in a conduit, according to the invention, comprises the steps of:

- non-intrusively determining a set of features associated with a flow regime of the multiphase fluid;
- providing a trained stochastic model and one or more reference sets of features corresponding to reference flow regimes;
- analyzing the sets of features with respect to the reference sets of features by the stochastic model for assigning the flow regime to one of the reference flow regimes.

Preferably, the method according to the invention, further comprises the step of determining a probability of a transition of the assigned flow regime into a different flow regime.

A computer program product according to the invention comprises instructions for causing a processor to carry out the steps of the method as is set forth in the foregoing.

These and other aspects of the invention will be further discussed with reference to drawing. It will be appreciated that the drawing is presented for illustrative purposes only and may not be used for limiting the scope of the appended claims.

BRIEF DESCRIPTION OF THE DRAWINGS

Figure 1 presents in a schematic way a method for identification of a flow regime using soft-sensing.
Figure 2 presents a schematic view of functional elements of the apparatus according to the invention.

DETAILED DESCRIPTION

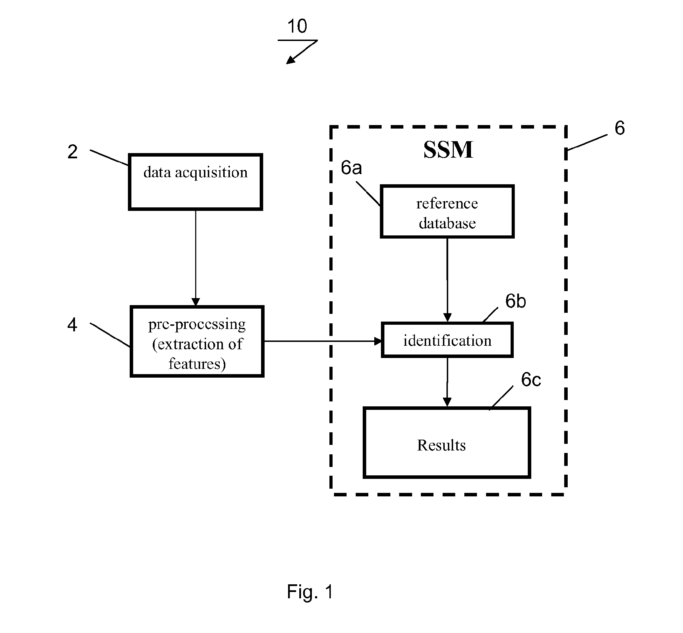

Figure 1 presents in a schematic way a method 10 for identification of a flow regime using soft-sensing. It will be appreciated that although this exemplary embodiment is described with reference to a two-phase fluid flowing in a conduit, the method according to the invention may be practiced on a multi-component fluid.

According to the invention at step 2 suitable data acquisition is carried out using soft-sensing. For example, a piezoelectric sensor may be arranged in contact with a wall of the conduit wherein the fluid is flowing. As a result, the sensor will pick-up a signal representative to a reaction of a material of the wall to a passage of the fluid. It is found that such signal is representative to a flow regime of the fluid leading to an understanding that by using specific features of the signal, like local peak-to-peak values, local maxima, local root-mean-square (RMS), values related to a locally integrated spectrogram over time and frequency, and so on, a pattern in the signal may be used as a fingerprint of a flow regime.

At step 4 of the method 10 according to the invention, data acquired by the sensor may be pre-processed in any suitable way. It will be appreciated that the way the data is conceived to be pre-processed may depend upon features stored in the reference database 6a used by the trained stochastic model for automatic identification of the flow regime. For example, a suitable set of features comprises a sequence of features determined by splitting the signal into a number of overlapping time windows. It will be appreciated that other types of signal pre-processing are contemplated as well.

After the signal has been acquired and preprocessed it is made available at the identification stage 6b of the statistical/stochastic method 6 (SSM) of data processing. The SSM stage is trained, that is, it operates using a reference database 6a wherein suitable characteristic features of possible flow regimes may be stored. By carrying out statistical or stochastic analysis, the SSM 6 provides a result 6c identifying the flow regime of the fluid flowing in the conduit.

Additionally, it is possible that the SSM 6, being run on a suitable processor, is arranged to determine a probability of a transition of the assigned flow regime into a different flow regime. This is particularly useful, when the features of a flow regime under consideration relate to a transient flow, or when they do not fully match any of the flow regimes stored in the reference database.

Preferably, the method 10 is implemented as a computer program product which comprises instructions for a processor to carry out or to control carrying out respective steps as is set forth in the foregoing.

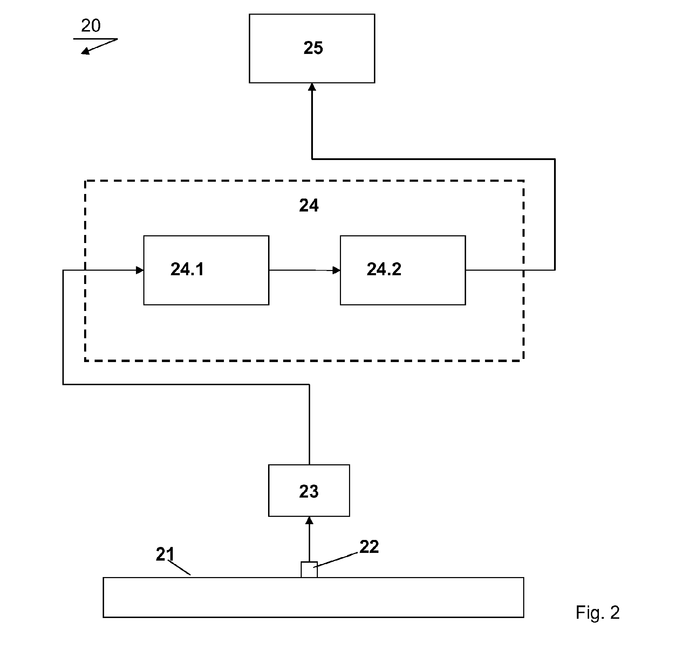

Figure 2 presents a schematic view of functional elements of the apparatus according to the invention. In this exemplary embodiment an apparatus 20 for recognition of flow regimes in a two-phase, gas-liquid flow is shown. The apparatus comprises a suitable sensor for non-intrusive measurements, for example, an acoustic sensor 22, which may be clamped on a pipe 21, wherein the two-phase fluid is flowing. It will be appreciated that accelerometers, strain gages, or optical fibers may also be used as sensors. The apparatus 20 may further comprise a readout unit 23, software 24 for performing signal processing and signal analysis, and graphical user interface (GUI) 25 showing the results. The software 24 may be arranged to incorporate signal pre-processing algorithms 24.1 and algorithms 24.2 (statistical or stochastic methods) for classification of flow regimes. The result may be displayed in real time using a GUI 25.

The functioning of the apparatus 20 is as follows. An acoustic signal generated by a multiphase flow in a wall of the pipe 21 is sensed by a sensor 22. The signal is collected by a readout unit 23 and is fed to software 24. The software may comprise two subroutines. The first subroutine, 24.1 is arranged to process a signal such that distinctive features of the signal are extracted. The features are indicative of the flow regimes. Subsequently, in the subroutine 24.2, a suitable stochastic model, like HMM may be used. The model is arranged to match the input signal features to known features characteristic for flow regimes. In this way classification is carried out.

In addition, the software 24 may be arranged to determine probabilities for a dynamic change of the flow regime, that is a chance that a current flow regime will be transformed into another flow regime. Such probabilities may be computed based on pattern recognition of a sequence of features and by assigning a quality parameter characteristic of a match between the current sequence of features and the reference features. This measure is based on the insight that in a transient flow the features comprise fingerprints of two flow regimes - the former distinctive flow regime and a future distinctive flow regime. By calculating a degree of fit between the features of the current flow regime and the features of the former and the candidate future flow regime a probability for a transition may be calculated. This feature is particularly advantageous as accurate and timely anticipation of a dynamic change in the flow regimes is enabled.

Concluding, the apparatus according to the invention provides an instrument for automatic recognition of a flow regime of a multi-phase fluid flowing in a conduit. A particular embodiment of the apparatus utilizing a non-intrusive sensor has an advantage that the flow is not disturbed during data extraction. In addition, use of a sensor for non-intrusive measurements has an advantage that a relatively simple sensor may be used, which reduces production costs of the apparatus. Further, by utilizing stochastic methods for classification of a flow regime a high level of generalization power may be achieved. This results in ability for expected approximation for the shape of borders between flow regimes. Due to this feature transient flows may be tackled accurately.

It will be appreciated that while specific embodiments of the invention have been described above, that the invention may be practiced otherwise than is described without departing the appended claims. In addition, isolated features discussed with reference to different figures may be combined.

## Claims

1.  An apparatus for recognition of flow regimes in a multiphase fluid flowing in a conduit, the apparatus comprising:

    - a sensor arranged for non-intrusively determining a set of features associated with a flow regime of the multiphase fluid;
    - a memory unit comprising a trained stochastic model and one or more reference sets of features corresponding to reference flow regimes;
    - a processor arranged for analyzing the set of features with respect to the reference sets of features by the stochastic model for assigning the flow regime to one of the reference flow regimes.

2.  An apparatus according to claim 1, wherein the set of features is obtained by pre-processing a signal detected by the sensor.

3.  An apparatus according to claim 2, wherein the set of features comprises a sequence of features determined by splitting the signal into a number of overlapping time windows.

4.  An apparatus according to claim 3, wherein the features relate to flow regimes of constituents of the multiphase fluid.

5.  An apparatus according to any one of the preceding claims, wherein Hidden Markov Model is used for the stochastic model.

6.  An apparatus according to any one of the preceding claims, wherein the sensor is arranged to be positioned in a mechanical contact with a wall of the conduit, wherein the set of features relates to an acoustic wave propagating in the wall caused by the multiphase fluid flowing in the conduit.

7.  An apparatus according to any one of the preceding claims, wherein the processor is further arranged to determine a probability of a transition of the assigned flow regime into a different flow regime.

8.  An apparatus according to any one of the preceding claims, wherein the multi-phase fluid comprises gas and liquid, the processor being further arranged to estimate gas volume fraction.

9.  A method for recognition of flow regimes in a multiphase fluid flowing in a conduit, comprising the steps of:

    - non-intrusively determining a set of features associated with a flow regime of the multiphase fluid;
    - providing a trained stochastic model and one or more reference sets of features corresponding to reference flow regimes;
    - analyzing the sets of features with respect to the reference sets of features by the stochastic model for assigning the flow regime to one of the reference flow regimes.

10. A method according to claim 9, further comprising the step of determining a probability of a transition of the assigned flow regime into a different flow regime.

11. A method according to claim 9 or 10, wherein the features relate to flow regimes of constituents of the multiphase fluid.

12. A computer program product comprising instructions for causing a processor to carry out the steps of the method according to claim 9, 10 or 11.

Fig. 1

20

25

24

24.1

24.2

23

21

22

Fig. 2

| Europäisches Patentamt / European Patent Office / Office européen des brevets | **EUROPEAN SEARCH REPORT** | Application Number EP 08 17 1871 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MAHVASH ET AL: "Two-phase flow pattern identification using continuous hidden Markov model" INTERNATIONAL JOURNAL OF MULTIPHASE FLOW, ELSEVIER, AMSTERDAM, NL, vol. 34, no. 3, 30 October 2007 (2007-10-30), pages 303-311, XP022438369 ISSN: 0301-9322 | 12 | INV. G01F1/66 G01F1/74 |
| Y | * the whole document * | 1-11 | |
| Y | US 5 741 980 A (HILL WAYNE S [US] ET AL) 21 April 1998 (1998-04-21) | 1-11 | |
| A | * column 8, line 53 - column 29, line 16; figures * | 12 | |
| A | WO 01/55553 A (SHELL INT RESEARCH [NL]; SHELL CANADA LTD [CA]) 2 August 2001 (2001-08-02) * the whole document * | 1-12 | |

TECHNICAL FIELDS SEARCHED (IPC)

G01F

The present search report has been drawn up for all claims

| Place of search | Date of completion of the search | Examiner |
|---|---|---|
| Munich | 27 April 2009 | Politsch, Erich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 17 1871

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2009

| Patent document cited in search report | | Publication date | Patent family member(s) | | Publication date |
|---|---|---|---|---|---|
| US 5741980 | A | 21-04-1998 | AU | 698507 B2 | 29-10-1998 |
| | | | AU | 4198296 A | 31-05-1996 |
| | | | CN | 1515876 A | 28-07-2004 |
| | | | CN | 1217054 A | 19-05-1999 |
| | | | EP | 0789834 A1 | 20-08-1997 |
| | | | JP | 10505165 T | 19-05-1998 |
| | | | JP | 3110048 B2 | 20-11-2000 |
| | | | NO | 972056 A | 01-07-1997 |
| | | | NZ | 297179 A | 26-05-2000 |
| | | | WO | 9614559 A1 | 17-05-1996 |
| | | | US | 5600073 A | 04-02-1997 |
| | | | US | 6014652 A | 11-01-2000 |
| | | | US | 5714691 A | 03-02-1998 |
| WO 0155553 | A | 02-08-2001 | AT | 292742 T | 15-04-2005 |
| | | | AU | 767417 B2 | 06-11-2003 |
| | | | AU | 3733701 A | 07-08-2001 |
| | | | BR | 0107821 A | 06-07-2004 |
| | | | DE | 60109894 D1 | 12-05-2005 |
| | | | DE | 60109894 T2 | 23-03-2006 |
| | | | EP | 1250513 A1 | 23-10-2002 |
| | | | MX | PA02007176 A | 28-01-2003 |
| | | | NO | 20023501 A | 13-09-2002 |
| | | | OA | 12141 A | 05-05-2006 |

EPO FORM P0459

For more details about this annex : see Official Journal of the European Patent Office, No. 12/82

## REFERENCES CITED IN THE DESCRIPTION

**Patent documents cited in the description**

- US 5353627 A

**Non-patent literature cited in the description**

- **Rabiner L.R.** A tutorial on hidden Markov models and selected applications in speech recognition. *Proc. IEEE,* 1989, vol. 77, 257-286